# EUROPEAN PATENT SPECIFICATION

(11) **EP 1 795 294 B1**
(45) Date of publication and mention of the grant of the patent: **02.11.2011**
(21) Application number: 06025425.7
(22) Date of filing: 08.12.2006
(51) Int. Cl.: B23K 35/28, C22C 21/00, B32B 15/01

(54) **Method of producing an aluminum alloy brazing sheet**
Verfahren zur Herstellung eines Aluminium-Lötbleches
Procédé de fabrication d'une feuille de brasage

(30) Priority: 08.12.2005 JP 2005355160
(43) Date of publication of application: 13.06.2007
(73) Proprietor: Furukawa-Sky Aluminum Corporation, Chiyoda-ku Tokyo (JP)
(72) Inventor: Fukumoto, Atsushi, Chiyoda-ku Tokyo (JP); Niikura, Akio, Chiyoda-ku Tokyo (JP)
(74) Representative: Forstmeyer, Dietmar

(56) References cited:
- JP-A- 4 036 600
- JP-A- 8 246 117
- JP-A- 2005 161 383
- JP-A- 2005 297 016

## Description

### FIELD OF THE INVENTION

The present invention relates to a method of producing an aluminum alloy brazing sheet that can be used in a heat exchanger for an automobile, in particular, an aluminum alloy brazing sheet that can be preferably used as a cooling water- or cooling medium-passage forming material of a heat exchanger, such as a radiator or a condenser.

### BACKGROUND OF THE INVENTION

An aluminum alloy is lightweight and has high heat conductivity, and thus is used in a heat exchanger for an automobile, for example, a radiator, a condenser, an evaporator, a heater, or an intercooler. The heat exchanger for an automobile is mainly produced via a brazing method. In general, brazing is conducted at a high temperature of about 600°C, by using an Al-Si-based filler alloy. Thus, an aluminum alloy brazing sheet, having excellent brazing properties and having high strength after brazing and corrosion resistance, is required.

An aluminum alloy heat exchanger to be produced through brazing is formed of a corrugated fin for mainly conducting heat radiation and a tube for circulating cooling water or a cooling medium. In the case where the tube is penetrated through corrosion or fracture, the cooling water or cooling medium circulating inside the tube leaks. Thus, an aluminum alloy brazing sheet having excellent strength after brazing and corrosion resistance, is essential for extending a life of a product using the same.

In recent years, a demand for reduction in weight of an automobile has been increasing, and corresponding reduction in weight of an automobile heat exchanger has been required. Thus, reduction in thickness of each member forming the heat exchanger has been studied, since there is a need of an aluminum alloy brazing sheet having further improved strength after brazing and corrosion resistance.

Hitherto, a tube material of a heat exchanger in which cooling water circulates inside the tube, such as a radiator or a heater for an automobile, generally employs a three-layer tube material obtained by: cladding a sacrificial anode material, such as an Al-Zn-based alloy, on an inner surface of a core alloy, such as an Al-Mn-based alloy typified by a JIS 3003 alloy; and cladding a filler alloy, such as an Al-Si-based alloy, on an atmospheric side of the core alloy.

However, the mechanical strength after brazing of the clad material employing the JIS 3003 core alloy is about 110 MPa, which is insufficient.

For improving the strength after brazing, a three-layer clad tube material having Mg added to a core alloy is proposed (see JP-A-8-246117 ("JP-A" means unexamined published Japanese patent application), and JP-A-2003-55727, for example). However, the addition of Mg to the core alloy causes a reaction of a fluoride-based flux to be used in a Nocolok brazing method and Mg, leading to formation of a compound such as MgF, and thereby to significantly degrade brazing properties.

Further, there is proposed a tube material capable of preventing degradation of the brazing properties and having improved strength, which is obtained by adding Mg to a sacrificial anode material cladded to an inner surface of the tube, rather than to the core alloy (see JP-A-6-212332 and JP-8-283891, for example). Since the tube material contains Mg added to the sacrificial anode material, the tube material can be used as a material for a seam welded flat tube in which the sacrificial anode material is not in contact with a bonding surface, but the tube material cannot be used as a material for a flat tube in which a surface of the sacrificial anode material must be bonded through brazing.

Further, there is proposed a four-layer clad material in which an intermediate material is formed between a core alloy and a filler alloy of a three-layer clad material formed of a filler alloy, a core alloy, and a sacrificial anode material (see JP-A-6-73480, JP-T-2005-505421 ("JP-T" means published searched patent publication), and JP-A-2005-161383, for example). The four-layer clad material is improved in strength after brazing by using a material containing a large Mg content in the core alloy. Further, diffusion of Mg, which is added to the core alloy, into the filler alloy is suppressed by forming the intermediate material having a low Mg content between the filler alloy and the core alloy. Thus, degradation in brazing properties is prevented in the case where a Nocolok brazing method is used for the four-layer clad material.

JP 2005 297016 A discloses another method for producing a brazing sheet and another brazing sheet.

### SUMMARY OF THE INVENTION

In order to satisfy demands for reduction in thickness of an aluminum alloy brazing sheet, properties such as strength after brazing and corrosion resistance must be improved. However, conventional techniques have difficulties in assuring brazing properties with a small thickness, while attaining higher strength and corrosion resistance simultaneously.

The present invention contemplates providing a method of producing an aluminum alloy brazing sheet having favorable brazing properties even in the case where a Nocolok brazing method is used, and having excellent strength after brazing and corrosion resistance, in particular, which can be preferably used as a fluid passage forming material of an automobile heat exchanger, in order to solve the problems in the conventional technique.

As a result of extensive study for solving the above-mentioned problems, the inventors of the present invention have found that a clad material having specific alloy composition and alloy structure can solve the problems. The present invention has been attained based on those findings.

According to the present invention, there is provided a method according to claims 1 and 2.

Other and further features and advantages of the invention will appear more fully from the following description.

### DETAILED DESCRIPTION OF THE INVENTION

Detailed description will be given of some preferred embodiments of the method of the present invention of producing an aluminum alloy brazing sheet.

The aluminum alloy brazing sheet according to the present invention is formed of a four-layer clad material, which is constituted by an aluminum alloy intermediate material cladded on one side of an aluminum alloy core alloy, an Al-Zn-based sacrificial anode material cladded on the other side of the core alloy, and an Al-Si-based filler alloy cladded on the other side of the intermediate material. Further, the core alloy, the intermediate material, and the sacrificial anode material are formed of aluminum alloys of the specific metal components and alloying composition, respectively; and the producing method produces the aluminum alloy brazing sheet, which has number density ratios N₁/N₂ and N₁/N₃ of 1.5 or more, where a number density ((the number of grains)/µm³) of an intermetallic compound having a sphere-equivalent grain diameter (i.e. a diameter of a sphere having the same volume to an individual grain) of 0.1 µm or less present in an alloy material of the core alloy, the intermediate material, and the sacrificial anode material, is represented by N₁, N₂, and N₃, respectively.

The intermetallic compound having a sphere-equivalent grain diameter of 0.1 µm or less in an alloy material inhibits transferring or migration of dislocation, subgrain boundary, or recrystallization interface, and has an action of delaying recrystallization. A higher number density of the intermetallic compound having a sphere-equivalent grain diameter of 0.1 µm or less causes difficulties in recrystallization upon brazing. Separately, for suppressing erosion from being occurred upon brazing, a layer in contact with a filler alloy must completely recrystallize at a filler alloy melting temperature or lower, because a molten filler alloy diffuses via a processed structure at a high speed, to cause erosion.

The inventors of the present invention found that, in the case where number density ratios N₁/N₂ and N₁/N₃ are each 1.5 or more, wherein a number density ((the number of grains)/µm³) of an intermetallic compound having a sphere-equivalent grain diameter of 0.1 µm or less present in the core alloy, the intermediate material, or the sacrificial anode material, is represented by N₁, N₂, or N₃, respectively, the intermediate material and the sacrificial anode material, which are layers in contact with the molten filler alloy, each recrystallize at a filler alloy melting temperature or lower, but the core alloy, which is not in direct contact with the molten filler alloy, can give a structure that does not recrystallize even after the completion of the brazing. Further, the intermediate material and the sacrificial anode material in contact with the molten filler alloy can provide a recrystallized structure (O tempered material) at a filler alloy melting temperature or lower, and thus erosion can be suppressed. The core alloy can provide a non-recrystallized structure (H tempered material) having a processed structure remained even after brazing.

For obtaining the number density ratios N₁/N₂ and N₁/N₃ of 1.5 or more, the core alloy, the intermediate material, and the sacrificial anode material each preferably have specific metal element components and alloy composition, as described in the below, and they are preferably produced via the method as specified in the present invention.

In conventional three-layer clad material and four-layer clad material, the core alloy has a recrystallized structure, and thus mechanical properties after brazing was the same as those of an O tempered material. However, in the four-layer clad material produced according to the method of the present invention, the core alloy has a non-recrystallized structure after brazing, and thus the mechanical properties after brazing can be the same as those of an H tempered material. As a result, the strength after brazing can remarkably be enhanced. In the case where the number density ratio is less than 1.5, the core alloy also has a recrystallized structure after brazing, and thus the strength after brazing cannot be improved.

Description will be given of reasons and addition ranges for component elements to be added to the core alloy, the intermediate material, and the sacrificial anode material, which form the aluminum alloy brazing sheet according to the present invention, and description will also be given of the filler alloy. (1. Core alloy)

Si forms, together with Fe and Mn, an Al-Fe-Mn-Si-based compound, acts to cause dispersion strengthening or solid solution strengthening by forming a solid solution in a matrix, to thereby enhance mechanical strength. Further, Si improves the strength by reacting with Mg to form an Mg₂Si compound. The Si content is within a range of 0.3 to 1.2% (% in a composition refers to mass%, the same applies below). If the Si content is less than 0.3%, it provides a small effect of Si; and if the Si content is more than 1.2%, it lowers a melting point of the core alloy and may be apt to cause melting. The Si content is preferably 0.5 to 1.0%.

Cu improves strength through solid solution strengthening, provides an electrically more positive potential to the core alloy, to increase a potential difference with potentials of the intermediate material, the sacrificial anode material, and a fin material, and improves the corrosion resistance effect by the sacrificial anode effect. The Cu content is within a range of 0.3 to 1.2%. If the Cu content is less than 0.3%, it provides a small effect of Cu; and if the Cu content is more than 1.2%, it may be apt to cause grain boundary corrosion. The Cu content is preferably 0.5 to 1.0%.

Mn has an effect of improving strength, brazing properties, and corrosion resistance, and providing an electrically more positive potential. The Mn content is 0.5 to 2.0%. If the Mn content is less than 0.5%, it provides a small effect of Mn; and if the Mn content is more than 2.0%, it is apt to allow formation of a coarse intermetallic compound upon casting, and to degrade plastic working properties. The Mn content is preferably 0.8 to 1.6%.

Mg has an effect of improving strength through Mg₂Si precipitation. The Mg content is 0.2 to 1.5%. If the Mg content is less than 0.2%, it provides a small effect of Mg; and if the Mg content is more than 1.5%, it lowers the melting point of the core alloy and may be apt to cause grain boundary corrosion. The Mg content is preferably 0.3 to 1.0%.

Fe is apt to form an intermetallic compound of a size which may serve as a recrystallization nucleus, and has an effect of lowering a recrystallization temperature. The Fe content is 0.5% or less, for providing a core alloy having a non-recrystallized structure after brazing. If the Fe content is more than 0.5%, it allows recrystallization of the core alloy after brazing, and reduces the strength. The Fe content is preferably 0.2% or less.

Ti improves strength through solid solution strengthening and improves corrosion resistance. The preferred Ti content is 0.02 to 0.3%. If the Ti content is less than 0.2%, it provides no effect of Ti; and if the Ti content is more than 0.3%, it is apt to allow formation of a coarse intermetallic compound and degrade plastic working properties. The Ti content is more preferably 0.1 to 0.2%.

V improves strength through solid solution strengthening and improves corrosion resistance. The preferred V content is 0.02 to 0.3%. If the V content is less than 0.02%, it provides no effect of V; and it the V content is more than 0.3%, it is apt to allow formation of a coarse intermetallic compound and degrade plastic working properties. The V content is more preferably 0.1 to 0.2%.

Zr and Cr form a fine intermetallic compound, to raise the recrystallization temperature, and thereby to easily provide a non-recrystallized structure after brazing. The contents of Zr and Cr each are preferably 0.02 to 0.3%. If the Zr/Cr content is less than 0.2%, it provides no effect of Zr and Cr; and if the Zr/Cr content is more than 0.3%, it is apt to allow formation of a coarse intermetallic compound and degrade plastic working properties. The contents of Zr and Cr each are more preferably 0.1 to 0.2%.

It is sufficient that at least one element of the Ti, V, Zr, and Cr is added to the core alloy.

### (2. Intermediate material)

Si forms, together with Fe and Mn, an Al-Fe-Mn-Si-based compound, acts to cause dispersion strengthening or solid solution strengthening by forming a solid solution in a matrix, to thereby enhance mechanical strength. Further, Si improves the strength, by reacting with Mg, which is diffused from the core alloy upon brazing, to form an Mg₂Si compound. The Si content is within a range of 1.2% or less. If the Si content is more than 1.2%, it lowers the melting point of the core alloy and may easily cause melting. The Si content is preferably 1.0% or less.

Mn has an effect of improving strength, brazing properties, and corrosion resistance, and providing an electrically more positive potential. The Mn content is 0.5 to 2.0%. If the Mn content is less than 0.5%, it provides a small effect of Mn; and if the Mn content is more than 2.0%, it is apt to allow formation of a coarse intermetallic compound upon casting, and to degrade plastic working properties. The Mn content is preferably 0.8 to 1.6%.

Fe is apt to form an intermetallic compound of a size which may serve as a recrystallization nucleus, and has an effect of accelerating recrystallization upon heat-brazing. The Fe content is 1.0% or less. If the Fe content is more than 1.0%, it increases the number of intermetallic compounds, and the compounds serve as cathode origins, to thereby degrade corrosion resistance. The Fe content is preferably 0.6% or less.

Ti improves strength through solid solution strengthening and improves corrosion resistance. The preferred Ti content is 0.3% or less. If the Ti content is more than 0.3%, it is apt to allow formation of a coarse intermetallic compound and degrade plastic working properties. The Ti content is more preferably 0.1 to 0.2%.

V improves strength through solid solution strengthening and improves corrosion resistance. The preferred V content is 0.02 to 0.3%. If the V content is less than 0.02%, it provides no effect of V; and it the V content is more than 0.3%, it is apt to allow formation of a coarse intermetallic compound and degrade plastic working properties. The V content is more preferably 0.1 to 0.2%.

Cu improves strength through solid solution strengthening, provides an electrically more positive potential to the intermediate alloy, to increase a potential difference with potential of the fin material, and improves the corrosion resistance effect by the sacrificial anode effect. The Cu content is preferably 1.0% or less. If the Cu content is more than 1.0%, it decreases the potential difference with the core alloy and degrades corrosion resistance. The Cu content is more preferably 0.6% or less.

At least one element of the Ti, V, and Cu may be added to the intermediate material, if necessary.

### (3. Sacrificial anode material)

Zn provides an electrically more negative potential to the sacrificial anode material, and improves corrosion resistance by the sacrificial anode effect by forming a potential difference between the sacrificial anode material and the core alloy. The Zn content is 1.0 to 6.0%. If the Zn content is less than 1.0%, it provides an insufficient effect of Zn; and if the Zn content is more than 6.0%, it increases an corrosion speed such that the sacrificial anode material is corroded and lost at an early stage, and degrades corrosion resistance. The Zn content is preferably 2.0 to 5.0%.

Si forms, together with Fe and Mn, an Al-Fe-Mn-Si-based compound, acts to cause dispersion strengthening or solid solution strengthening by forming a solid solution in a matrix, to thereby enhance mechanical strength. Further, Si improves the strength, by reacting with Mg, which is diffused from the core alloy upon brazing, to form an Mg₂Si compound. The Si content is preferably 1.0% or less. If the Si content is more than 1.0%, it lowers the melting point of the core alloy and may easily cause melting. Further, Si provides an electrically more positive potential to the sacrificial anode material, and thus inhibits the sacrificial anode effect, to thereby degrade corrosion resistance. The Si content is more preferably 0.8% or less.

Mn improves strength and corrosion resistance. The Mn content is preferably 2.0% or less. If the Mn content is more than 2.0%, it is apt to allow formation of a coarse intermetallic compound upon casting, and to degrade plastic working properties. Further, Mn provides an electrically more positive potential to the sacrificial anode material, and thus inhibits the sacrificial anode effect, to thereby degrade corrosion resistance. The Mn content is more preferably 1.6% or less.

Ti improves strength through solid solution strengthening and improves corrosion resistance. The preferred Ti content is 0.3% or less. If the Ti content is more than 0.3%, it is apt to allow formation of a coarse intermetallic compound and degrade plastic working properties. The Ti content is more preferably 0.1 to 0.2%.

V improves strength through solid solution strengthening and improves corrosion resistance. The preferred V content is 0.02 to 0.3%. If the V content is less than 0.02%, it provides no effect of V; and it the V content is more than 0.3%, it is apt to allow formation of a coarse intermetallic compound and degrade plastic working properties. The V content is more preferably 0.1 to 0.2%.

At least one element of the Si, Mn, Ti, and V may be added to the sacrificial anode material, if necessary.

### (4. Filler alloy)

As the filler alloy, use may be made of an Al-Si-based filler alloy usually used, and is not particularly limited. For example, JIS 4343, 4045 alloys (Al-7 to 13 mass% Si) are preferred.

Next, the method of the present invention of producing an aluminum alloy brazing sheet, will be described.

The aluminum alloy brazing sheet according to the present invention is produced by: cladding the intermediate material composed of the alloy described above on one side of the core alloy composed of the alloy described above; cladding the sacrificial anode material composed of the alloy described above on the other side of the core alloy; and cladding the Al-Si-based filler alloy on the other side of the intermediate material. The thus-obtained aluminum alloy brazing sheet is necessary to have the number density ratios N₁/N₂ and N₁/N₃ of 1.5 or more, in which a number density ((the number of grains)/µm³) of an intermetallic compound having a sphere-equivalent grain diameter of 0.1 µm or less, which compound is present in the core alloy, the intermediate material, and the sacrificial anode material, is represented by N₁, N₂, and N₃, respectively.

An aluminum alloy having the desired component composition described above for the core alloy, the intermediate material, or the sacrificial anode material is melted, cast, machine finished; subjected, before hot rolling, to homogenization treatment at a temperature of 500°C or lower, or no homogenization treatment, for the core alloy, and subjected to homogenization treatment at a temperature of 550°C or higher, for the intermediate material and the sacrificial anode material; and then rolled to a desired thickness through hot rolling, to thereby obtain the core alloy, the intermediate material, and the sacrificial anode material, respectively. Further, in the production method of the present invention, the homogenization treatment of the core alloy is carried out at a temperature lower than that of the homogenization treatment of the intermediate material and sacrificial anode material.

The core alloy before hot rolling is subjected to homogenization treatment at a temperature of 500°C or lower, or no homogenization treatment is conducted to the core alloy, to thereby form a fine intermetallic compound in a core alloy ingot, which is effective to raise the recrystallization temperature of the core alloy. Homogenization treatment at a temperature of 500°C or higher causes increase in size, i.e. coarsening, of an intermetallic compound present in the core alloy ingot, and causes lowering of the recrystallization temperature. The homogenization treatment of the core alloy is conducted more preferably at a temperature of 480°C or lower.

Separately, the intermediate material and sacrificial anode material before hot rolling each are subjected to homogenization treatment at a temperature of 550°C or higher, to form a solid solution of the fine intermetallic compound in ingots of the intermediate material and sacrificial anode material, to thereby make it possible to obtain structure in which coarse intermetallic compounds are sparsely distributed. As a result, a pinning effect can be suppressed, and the recrystallization temperature is effectively lowered. Homogenization treatment at a temperature of 500°C or lower raises the recrystallization temperature, to provide substantially no difference with the recrystallization temperature of the core alloy.

The thus-obtained core alloy, intermediate material, and sacrificial anode material are combined with any filler alloy in the order of the sacrificial anode material/the core alloy/the intermediate material/the filler alloy, and the combined material is hot rolled at 400 to 500°C, to thereby produce a clad material.

In the method of the present invention, the resultant clad material is then cold rolled, but at least one intermediate annealing at a temperature of 350°C or higher for two hours or longer is conducted, in the midway of the cold rolling steps. According to this method, the Ti, Zr, Cr, or the like added to the core alloy causes precipitation of an intermetallic compound having a sphere-equivalent grain diameter of 0.1 µm or less, which effectively acts on raising the recrystallization temperature of the core alloy and increasing the number density. As a result, the recrystallization temperature of the core alloy can be raised up. If an intermediate annealing at a temperature of lower than 350°C is conducted, it provides an insufficient effect, and further the material cannot be annealed completely and is insufficiently softened, to thereby cause problems in the subsequent step(s). The same as the above discussion applies to the case of an intermediate annealing for two hours or less.

Then, a final cold rolling is conducted at a final cold-rolled rate (i.e. the reduction ratio at the finally conducted cold rolling) of 10 to 30%, preferably 10 to 20%. In that manner, it is possible to obtain a clad material, in which the core alloy has a non-recrystallized structure after brazing, and the intermediate material and the sacrificial anode material each have a recrystallized structure at a filler alloy melting temperature or lower.

If the final cold-rolled rate is less than 10%, the intermediate material and the sacrificial anode material do not recrystallize at a filler alloy melting temperature or lower, and erosion is apt to occur. If the final cold-rolled rate is more than 30%, the core alloy is also recrystallized upon brazing, and the mechanical strength of the aluminum alloy brazing sheet after brazing is lowered. Further, a crystal grain diameter of the intermediate material and the sacrificial anode material becomes fine, and thus the filler alloy corrodes from grain boundary, to thereby cause erosion. The final cold-rolled rate is more preferably 10 to 20%.

In the present invention, the method of producing an aluminum alloy brazing sheet can give the metal structure as described above, and can provide a large temperature difference between the recrystallization temperature of the core alloy and the recrystallization temperatures of the intermediate material and the sacrificial anode material, and also can provide good brazing properties, and sufficiently high strength after brazing.

Further, the thickness of the aluminum alloy brazing sheet of the present invention, and the cladding ratio (or thickness) of the respective layer each are not particularly limited. Generally, in the case where the brazing sheet of the present invention is used as a material for a tube in which a cooling water or cooling medium is to be circulated, the brazing sheet of the present invention can be made into a form of a thin brazing sheet having a thickness of about 0.3 mm or thinner. In that case, the thickness of the core alloy is generally in the range of approximately 0.050 to 0.200 mm, and the cladding ratio of any layer of the sacrificial anode material, intermediate material or filler alloy is generally in the range of approximately 7% to 20% (the thickness of the layer is generally in the range of approximately 0.020 to 0.050 mm). Alternatively, in the case where the brazing sheet of the present invention is used as a material for a plate, which provides a structure of a heat exchanger, by bonding with a tube, the brazing sheet of the present invention can be made into one having a thickness of about 1.2 mm or thinner. In that case, the thickness of the core alloy is generally in the range of approximately 0.100 to 1.100 mm, and the cladding ratio of any layer of the sacrificial anode material, intermediate material or filler alloy is generally in the range of approximately 2% to 10% (the thickness of the layer is generally in the range of approximately 0.020 to 0.120 mm).

The aluminum alloy brazing sheet has a small thickness, excellent mechanical strength and corrosion resistance, and good brazing properties, and thus is preferable for production of a lightweight heat exchanger for an automobile.

According to the present invention, it is possible to produce an aluminum alloy brazing sheet having a small thickness, excellent brazing properties such as fin bonding rate and erosion resistance, high mechanical strength after brazing, and good corrosion resistance on both the inner and outer surfaces. Further, the brazing sheet has a small thickness, is lightweight and has excellent heat conductivity as an automobile heat exchanger, and it has excellent corrosion resistance on atmospheric and cooling medium sides, and is capable of further extending a life of the heat exchanger.

The present invention will be described in more detail based on the following examples, but the invention is not intended to be limited thereto.

### EXAMPLES

An alloy for a core alloy, intermediate material, or sacrificial anode material, having the metal components and composition as shown in Tables 1, 2, and 3, was cast through mold casting, machine finished on both sides, and subjected to homogenization treatment for the core alloy, the intermediate material, and the sacrificial anode material at a temperature as shown in Tables 4 and 5. A 4045 alloy was used as a filler alloy, and the filler alloy, the intermediate material, and the sacrificial anode material were each rolled to a thickness of 6 mm through hot rolling. The alloy materials were combined with the core alloy of thickness 22 mm as shown in Tables 4 and 5, and clad ratios of the filler alloy, the intermediate material, and the sacrificial anode material each were set to 15%. The resultant combination of materials was pressure bonded at 500°C through hot rolling, to thereby obtain a four-layer clad material having a thickness of 3.5 mm. In the midway of cold rolling, one intermediate annealing was conducted under the conditions of temperature, as shown in Tables 4 and 5, and the thus-obtained clad material was cold rolled to a final sheet thickness of 0.25 mm at a final rolled (reduction) ratio as shown in Tables 4 and 5, to thereby obtain an H tempered sheet material.

Then, a part of the thus-prepared sheet material was used as a sample material, and the sample material was subjected to calculation of number density ratios of an intermetallic compound and evaluation of strength after brazing, corrosion resistance, and brazing properties by the methods described below. Tables 6 and 7 show the results.

### (1) Number density ratios N₁/N₂ and N₁/N₃ of intermetallic compound having sphere-equivalent grain diameter of 0.1 µm or less:

The number densities ((the number of grains)/µm³) of the intermetallic compound having a sphere-equivalent grain diameter of 0.1 µm or less, which compound was present in the core alloy, the intermediate material, and the sacrificial anode material each forming the sample material, was found through observation by using a transmission electron microscope (TEM). First, each sample material to be tested was observed in ten visual fields, and an image in TEM photograph of each field was analyzed, to thereby calculate the size and density of the intermetallic compound. The density ratio of the intermetallic compound as shown in the tables represents an average of the values obtained in the ten visual fields, respectively.

### (2) Tensile strength after brazing:

After heat-brazing at 600°C for 3 min, the sample was cooled at a cooling speed of 200°C/min and was left standing at room temperature for 1 week. The sample was subjected to a tensile strength test at normal temperature, under the conditions of tensile speed 10 mm/min and gauge length 50 mm, according to JIS Z2241.

### (3) Fin bonding rate:

A fin material formed of a 3003 alloy was formed into a corrugated shape, and attached to a filler alloy surface of the sample material. Then, the resultant sample was immersed in an aqueous solution of a 5% fluoride-based flux, followed by drying at 200°C, and subjected to Nocolok brazing at 600°C for 3 min. A test core having a fin bonding rate of 95% or more was designated to as a material having good brazing properties "○", and a test core having a fin bonding rate of less than 95% was designated to as a material having insufficient brazing properties "×".

### (4) Erosion resistance:

A test core was produced in the same manner as above. Sectional microobservation was conducted, and whether any erosion was occurred or not, was confirmed. A test core without erosion was designated to as "○", and a test core on which erosion was observed was designated to as "×".

### (5) External corrosion resistance:

A test core was produced in the same manner as above, and a sacrificial anode material side of the test core was sealed. The resultant sealed test core was subjected to a CASS test (JIS H8681) for 500 hours, to measure a maximum pitting depth.

### (6) Internal corrosion resistance:

After heat-brazing at 600°C for 3 min in the same manner as for the tensile test sample, a filler alloy side of the sample was sealed. A cycle immersion test in hot water containing 500 ppm of Cl⁻, 100 ppm of SO₄²⁻, and 10 ppm of Cu²⁺ at 88°C for 8 hours and at room temperature for 16 hours, was conducted for 3 months, to measure the maximum pitting depth.

**Table 1**

| | Alloy symbol | Alloy composition (mass%) | | | | | | | | | | |
|---|---|---|---|---|---|---|---|---|---|---|---|---|
| | | Si | Fe | Cu | Mn | Mg | Cr | Zr | Zn | V | Ti | Al |
| Alloy for core alloy (According to this invention) | A1 | 0.5 | 0.15 | 0.5 | 1.1 | 0.6 | 0.1 | - | - | - | 0.15 | Balance |
| | A2 | 1.0 | 0.15 | 0.5 | 1.1 | 0.6 | 0.1 | 0.1 | - | - | 0.15 | Balance |
| | A3 | 1.2 | 0.15 | 0.5 | 1.1 | 0.6 | - | 0.1 | - | - | 0.15 | Balance |
| | A4 | 0.7 | 0.15 | 0.8 | 1.1 | 0.3 | - | 0.1 | - | 0.15 | - | Balance |
| | A5 | 0.5 | 0.15 | 0.8 | 1.1 | 0.6 | 0.1 | - | - | 0.15 | - | Balance |
| | A6 | 0.5 | 0.15 | 0.5 | 1.1 | 0.9 | 0.1 | - | - | 0.15 | - | Balance |
| | A7 | 0.5 | 0.15 | 0.3 | 1.1 | 1.2 | 0.1 | - | - | - | 0.15 | Balance |
| | A8 | 0.5 | 0.15 | 1.0 | 1.1 | 0.3 | - | 0.1 | - | - | - | Balance |
| | A9 | 0.5 | 0.15 | 0.5 | 0.5 | 0.6 | - | 0.1 | - | - | - | Balance |
| Alloy for core alloy (for comparison) | A10 | 0.5 | 0.15 | 0.5 | 1.5 | 0.6 | 0.1 | 0.1 | - | - | 0.15 | Balance |
| | A11 | 0.3 | 0.15 | 0.3 | 1.1 | 1.7 | - | - | - | - | 0.15 | Balance |
| | A12 | 0.5 | 0.15 | 0.5 | 1.1 | 0.1 | - | - | - | - | - | Balance |
| | A13 | 0.1 | 0.15 | 0.5 | 1.1 | 0.6 | 0.1 | - | - | - | 0.15 | Balance |
| | A14 | 0.5 | 0.15 | 1.5 | 0.3 | 0.6 | - | - | - | - | - | Balance |

**Table 2**

| | Alloy symbol | Alloy composition (mass%) | | | | | | | | | | |
|---|---|---|---|---|---|---|---|---|---|---|---|---|
| | | Si | Fe | Cu | Mn | Mg | Cr | Zr | Zn | V | Ti | Al |
| | B1 | 0.7 | 0.15 | 0.2 | 1.1 | - | - | - | - | - | 0.15 | Balance |
| Intermediate material alloy (According to this invention) | B2 | 0.7 | 0.15 | 0.5 | 1.1 | - | - | - | - | - | 0.15 | Balance |
| | B3 | 0.3 | 0.15 | 0.5 | 1.1 | - | - | - | - | 0.15 | - | Balance |
| | B4 | 1.0 | 0.15 | - | 1.1 | - | - | - | - | - | 0.15 | Balance |
| | B5 | 0.7 | 0.15 | 0.2 | 0.5 | - | - | - | - | - | - | Balance |
| Intermediate material alloy (for comparison) | B6 | 1.5 | 0.15 | 0.5 | 1.1 | - | - | - | - | - | - | Balance |
| | B7 | 0.7 | 0.15 | 1.2 | 1.1 | - | - | - | - | - | - | Balance |
| | B8 | 0.1 | 0.15 | - | 2.2 | - | - | - | - | - | - | Balance |

**Table 3**

| | Alloy symbol | Alloy composition (mass%) | | | | | | | | | | |
|---|---|---|---|---|---|---|---|---|---|---|---|---|
| | | Si | Fe | Cu | Mn | Mg | Cr | Zr | Zn | V | Ti | Al |
| | C1 | 0.3 | 0.12 | - | 0.5 | - | - | - | 2.0 | - | 0.15 | Balance |
| Sacrificial anode material alloy (According to this invention) | C2 | 0.3 | 0.12 | - | 0.5 | - | - | - | 3.5 | - | 0.15 | Balance |
| | C3 | 0.3 | 0.12 | - | 0.5 | - | - | - | 5.0 | - | 0.15 | Balance |
| | C4 | 0.7 | 0.12 | - | 0.5 | - | - | - | 3.5 | 0.15 | - | Balance |
| | C5 | 0.7 | 0.12 | - | 1.1 | - | - | - | 3.5 | 0.15 | - | Balance |
| Sacrificial anode material alloy (for comparison) | C6 | 0.7 | 0.12 | - | 0.5 | - | - | - | 0.8 | - | - | Balance |
| | C7 | 0.7 | 0.13 | - | 0.5 | - | - | - | 7.0 | - | - | Balance |
| | C8 | 1.5 | 0.14 | - | 0.5 | - | - | - | 3.5 | - | - | Balance |

**Table 4**

| Test sample No. | | Alloy symbol | | | Manufacturing process | | | | |
|---|---|---|---|---|---|---|---|---|---|
| | | Core alloy | Intermediate material | Sacrificial anode material | Homogenization treatment temperature (°C) | | Intermediate annealing temperature (°C) | Intermediate annealing time (h) | Final cold-rolled ratio (%) |
| | | | | | Core alloy | Intermediated material, Sacrificial anode material | | | |
| This invention | 1 | A1 | B1 | C2 | 450 | 600 | 380 | 2 | 15 |
| | 2 | A2 | B1 | C2 | 450 | 600 | 380 | 2 | 15 |
| | 3 | A3 | B1 | C2 | 450 | 600 | 380 | 2 | 15 |
| | 4 | A4 | B1 | C2 | 450 | 600 | 380 | 2 | 15 |
| | 5 | A5 | B1 | C2 | 450 | 600 | 380 | 2 | 15 |
| | 6 | A6 | B1 | C2 | 450 | 600 | 380 | 2 | 15 |
| | 7 | A7 | B1 | C2 | 450 | 600 | 380 | 2 | 15 |
| | 8 | A8 | B1 | C2 | 450 | 600 | 380 | 2 | 15 |
| | 9 | A9 | B1 | C2 | 450 | 600 | 380 | 2 | 15 |
| | 10 | A10 | B1 | C2 | 450 | 600 | 380 | 2 | 15 |
| | 11 | A10 | B2 | C2 | 450 | 600 | 380 | 2 | 15 |
| | 12 | A10 | B3 | C2 | 450 | 600 | 380 | 2 | 15 |
| | 13 | A10 | B4 | C2 | 450 | 600 | 380 | 2 | 15 |
| | 14 | A10 | B5 | C2 | 450 | 600 | 380 | 2 | 15 |
| | 15 | A10 | B1 | C1 | 450 | 600 | 380 | 2 | 15 |
| | 16 | A10 | B1 | C3 | 450 | 600 | 380 | 2 | 15 |
| | 17 | A10 | B1 | C4 | 450 | 600 | 380 | 2 | 15 |
| | 18 | A10 | B1 | C5 | 450 | 600 | 380 | 2 | 15 |
| Comparative example | 19 | A11 | B1 | C2 | 450 | 600 | 380 | 2 | 15 |
| | 20 | A12 | B1 | C2 | 450 | 600 | 380 | 2 | 15 |
| | 21 | A13 | B1 | C2 | 450 | 600 | 380 | 2 | 15 |
| | 22 | A14 | B1 | C2 | 450 | 600 | 380 | 2 | 15 |
| | 23 | A10 | B6 | C2 | 450 | 600 | 380 | 2 | 15 |
| | 24 | A10 | B7 | C2 | 450 | 600 | 380 | 2 | 15 |
| | 25 | A10 | B8 | C2 | 450 | 600 | 380 | 2 | 15 |
| | 26 | A10 | B1 | C6 | 450 | 600 | 380 | 2 | 15 |
| | 27 | A10 | B1 | C7 | 450 | 600 | 380 | 2 | 15 |
| | 28 | A10 | B1 | C8 | 450 | 600 | 380 | 2 | 15 |

**Table 5**

| Test sample No. | | Alloy symbol | | | Manufacturing process | | | | |
|---|---|---|---|---|---|---|---|---|---|
| | | Core alloy | Intermediate material | Sacrificial anode material | Homogenization treatment temperature (°C) | | Intermediate annealing temperature (°C) | Intermediate annealing time (h) | Final cold-rolled ratio (%) |
| | | | | | Core alloy | Intermediate material, Sacrificial anode material | | | |
| This invention | 29 | A10 | B1 | C2 | 450 | 600 | 380 | 2 | 15 |
| | 30 | A10 | B1 | C2 | 480 | 550 | 380 | 2 | 15 |
| | 31 | A10 | B1 | C2 | 450 | 600 | 350 | 2 | 15 |
| | 32 | A10 | B1 | C2 | 450 | 600 | 380 | 5 | 15 |
| | 33 | A10 | B1 | C2 | 450 | 600 | 380 | 10 | 15 |
| | 34 | A10 | B1 | C2 | 450 | 600 | 380 | 2 | 10 |
| | 35 | A10 | B1 | C2 | 450 | 600 | 380 | 2 | 13 |
| | 36 | A10 | B1 | C2 | 450 | 600 | 380 | 2 | 20 |
| | 37 | A10 | B1 | C2 | - | 600 | 380 | 2 | 15 |
| Comparative example | 38 | A10 | B1 | C2 | 550 | 600 | 380 | 2 | 15 |
| | 39 | A10 | B1 | C2 | 450 | 450 | 380 | 2 | 15 |
| | 40 | A10 | B1 | C2 | 450 | 600 | 300 | 1 | 15 |
| | 41 | A10 | B1 | C2 | 450 | 600 | 380 | 2 | 5 |
| | 42 | A10 | B1 | C2 | 450 | 600 | 380 | 2 | 35 |

**Table 6**

| Test sample No. | | N₁/N₂ | N₁/N₃ | Tensile strength after brazing (N/mm²) | Fin bonding rate | Erosion resistance | Maximum pitting depth (mm) | |
|---|---|---|---|---|---|---|---|---|
| | | | | | | | Outer side | Inner side |
| | 1 | 3.0 | 4.0 | 215 | ○ | ○ | 0.09 | 0.10 |
| | 2 | 4.0 | 5.3 | 227 | ○ | ○ | 0.08 | 0.09 |
| | 3 | 3.3 | 4.3 | 234 | ○ | ○ | 0.08 | 0.11 |
| | 4 | 3.3 | 4.3 | 205 | ○ | ○ | 0.06 | 0.11 |
| | 5 | 3.0 | 4.0 | 212 | ○ | ○ | 0.08 | 0.12 |
| | 6 | 3.3 | 4.3 | 233 | ○ | ○ | 0.11 | 0.12 |
| | 7 | 3.5 | 4.7 | 225 | ○ | ○ | 0.11 | 0.13 |
| | 8 | 2.8 | 3.7 | 207 | ○ | ○ | 0.07 | 0.11 |
| This invention | 9 | 3.0 | 4.0 | 215 | ○ | ○ | 0.08 | 0.10 |
| | 10 | 3.3 | 4.3 | 218 | ○ | ○ | 0.08 | 0.11 |
| | 11 | 3.3 | 4.3 | 220 | ○ | ○ | 0.12 | 0.11 |
| | 12 | 3.8 | 4.3 | 217 | ○ | ○ | 0.12 | 0.11 |
| | 13 | 2.6 | 4.3 | 210 | ○ | ○ | 0.07 | 0.12 |
| | 14 | 4.3 | 4.3 | 210 | ○ | ○ | 0.07 | 0.11 |
| | 15 | 3.3 | 4.3 | 217 | ○ | ○ | 0.08 | 0.14 |
| | 16 | 3.3 | 4.3 | 217 | ○ | ○ | 0.08 | 0.09 |
| | 17 | 3.3 | 3.6 | 219 | ○ | ○ | 0.07 | 0.13 |
| | 18 | 3.3 | 3.3 | 221 | ○ | ○ | 0.08 | 0.11 |
| | 19 | 1.4 | 2.0 | 204 | × | × | 0.14 | 0.19 |
| | 20 | 1.3 | 1.4 | 156 | ○ | ○ | 0.06 | 0.09 |
| | 21 | 2.3 | 3.0 | 193 | ○ | ○ | 0.08 | 0.10 |
| | 22 | 1.4 | 2.0 | 227 | × | × | 0.12 | 0.18 |
| Comparative example | 23 | 2.6 | 4.3 | 219 | ○ | × | 0.18 | 0.12 |
| | 24 | 3.3 | 4.3 | 223 | × | × | Penetration | 0.10 |
| | 25 | 1.3 | 4.3 | 198 | ○ | × | 0.13 | 0.09 |
| | 26 | 3.3 | 3.6 | 217 | ○ | ○ | 0.09 | Penetration |
| | 27 | 3.3 | 3.6 | 219 | ○ | ○ | 0.09 | Penetration |
| | 28 | 3.3 | 2.8 | 219 | ○ | × | 0.10 | Penetration |

**Table 7**

| Test sample No. | | N₁/N₂ | N₁/N₃ | Tensile strength after brazing (N/mm²) | Fin bonding rate | Erosion resistance | Maximum pitting depth (mm) | |
|---|---|---|---|---|---|---|---|---|
| | | | | | | | Outer side | Inner side |
| This invention | 29 | 3.3 | 4.3 | 218 | ○ | ○ | 0.08 | 0.11 |
| | 30 | 3.1 | 3.4 | 219 | ○ | ○ | 0.09 | 0.11 |
| | 31 | 3.3 | 4.6 | 218 | ○ | ○ | 0.08 | 0.12 |
| | 32 | 3.0 | 3.8 | 221 | ○ | ○ | 0.08 | 0.11 |
| | 33 | 2.8 | 3.4 | 225 | ○ | ○ | 0.07 | 0.11 |
| | 34 | 3.3 | 4.3 | 220 | ○ | ○ | 0.08 | 0.13 |
| | 35 | 3.3 | 4.3 | 215 | ○ | ○ | 0.09 | 0.11 |
| | 36 | 3.3 | 4.3 | 212 | ○ | ○ | 0.08 | 0.12 |
| | 37 | 3.3 | 4.0 | 210 | ○ | ○ | 0.09 | 0.12 |
| Comparative example | 38 | 1.2 | 1.3 | 195 | ○ | ○ | 0.09 | 0.11 |
| | 39 | 1.3 | 1.4 | 192 | × | × | 0.17 | 0.12 |
| | 40 | 1.3 | 1.4 | 195 | ○ | ○ | 0.10 | 0.11 |
| | 41 | 3.3 | 4.3 | 219 | × | × | 0.15 | 0.10 |
| | 42 | 3.3 | 4.3 | 209 | ○ | × | 0.13 | 0.11 |

As is apparent from Tables 6 and 7, the test material Nos. 1 to 18, and 29 to 37, as examples according to the present invention, each had a sufficiently high tensile strength after brazing of 200 N/mm² or higher, was excellent in brazing properties, such as the fin bonding rate and erosion resistance, and was good in both the external (corresponding to an atmospheric side of a heat exchanger) and internal (corresponding to a cooling medium side) corrosion resistance.

Contrary to the above, the test material Nos. 20, 21, 25, 38, 39, and 40, as comparative examples, each had a tensile strength after brazing of less than 200 N/mm², which was quite lower than those of the examples according to the present invention. The test material Nos. 20 and 21 each had poorly low mechanical strength, due to the too small addition amount(s) of Si or/and Mg, each of which is an element to contribute to age-hardening. Further, another reason of the lowered mechanical strength of the test material No. 20, is assumed that the material had insufficient addition amounts of elements to be added to the core alloy, and the number density ratio(s) N₁/N₂ or/and N₁/N₃ of the intermetallic compound having a sphere-equivalent grain diameter of 0.1 µm or less was less than 1.5, and thus the core alloy recrystallized after brazing. The test material No. 25 had an excessive Mn addition amount to the intermediate material, and thus formed a coarse intermetallic compound, to thereby have poorly low mechanical strength.

The test material No. 38 was obtained through homogenization treatment of the core alloy at a too high homogenization treatment temperature; thus, the number density of the intermetallic compound in the core alloy was decreased, and the core alloy recrystallized upon brazing, to thereby give an insufficiently low strength. The test material No. 39 was obtained through homogenization treatment of the intermediate material and the sacrificial anode material at too low homogenization treatment temperatures, and the number densities of the intermetallic compound in the intermediate material and the sacrificial anode material were increased; thus, recrystallization of the intermediate material was not completed before the filler alloy melted, and erosion was caused, to thereby give a poorly low fin bonding rate. The test material No. 40 was produced through insufficient annealing temperature and time, and thus the number density ratios N₁/N₂ and N₁/N₃ of the intermetallic compound having a sphere-equivalent grain diameter of 0.1 µm or less were less than 1.5.

In the test material Nos. 19, 22, 23, 24, 25, 28, 39, 41, and 42, the fin bonding rate was low, or erosion was occurred, due to the Mg added to the core alloy or other cause, and these samples for comparison each had poor brazing properties. In the test material Nos. 24, 26, 27, and 28, penetration (through-hole) corrosion was occurred either or both of the outer side or/and the inner side of the sample.

Having described our invention as related to the present embodiments, it is our intention that the invention not be limited by any of the details of the description, unless otherwise specified, but rather be construed broadly within its scope as set out in the accompanying claims.

## Claims

1. A method of producing an aluminum alloy brazing sheet, **characterized in**
**that** the aluminum alloy brazing sheet is composed of: a core alloy that is an aluminum alloy containing 0.3 to 1.2% (mass%, the same applies below) of Si, 0.3 to 1.2% of Cu, 0.5 to 2.0% of Mn, 0.2 to 1.5% of Mg, 0.5% or less of Fe, and containing one or more elements selected from the group consisting of 0.02 to 0.3% of Ti, 0.02 to 0.3% of V, 0.02 to 0.3% of Zr, and 0.02 to 0.3% of Cr, and the balance of Al and unavoidable impurities; an intermediate material that is an aluminum alloy containing 1.2% or less of Si, 1.0% or less of Fe, 0.5 to 2.0% of Mn, and containing, if necessary, one or more elements selected from the group consisting of 1.0% or less of Cu, 0.02 to 0.3% of Ti, and 0.02 to 0.3% of V, and the balance of Al and unavoidable impurities; and a sacrificial anode material that is an aluminum alloy containing Zn and an Al-Fe-Mn-Si-based compound, wherein the aluminum alloy contains 1.0 to 6.0% of Zn, 1.0% or less of Si, and 2.0% or less of Mn, and containing, if necessary, one or more elements selected from the group consisting of 0.02 to 0.3% of Ti and 0.02 to 0.3% of V, and the balance of Al and unavoidable impurities; and
**that** the producing method comprises the steps of:
subjecting the core alloy to homogenization treatment at a temperature of 500°C or lower, or to no homogenization treatment, and subjecting the intermediate material and the sacrificial anode material to homogenization treatment at a temperature of 550°C or higher, to produce the core alloy, the intermediate alloy, and the sacrificial anode material; and cladding the intermediate material on one side of the core alloy, cladding the sacrificial anode material on the other side of the core alloy, cladding an Al-Si-based filler alloy on the other side of the intermediate material, and hot rolling the resultant cladded alloy materials, to produce a clad material;
and conducting at least one intermediate annealing at a temperature of 350°C or higher for two hours or more, in the midway of cold rolling, with the final cold rolled rate of 10 to 30%, to give number density ratios N₁/N₂ and N₁/N₃, each of which is 1.5 or more, in which N₁, N₂, and N₃ represent a number density of an intermetallic compound having a sphere-equivalent grain diameter of 0.1 µm or less present in the core alloy, the intermediate material, and the sacrificial anode material, respectively, wherein the number density is (the number of grains)/µm³, and wherein the sphere-equivalent grain diameter is the diameter of a sphere having the same volume as an individual grain.

2. The method of producing an aluminum alloy brazing sheet according to Claim 1, wherein the aluminum alloy brazing sheet is for a heat exchanger.

## Patentansprüche

1. Verfahren zum Herstellen eines Lötblechs aus einer Aluminiumlegierung, **dadurch gekennzeichnet,**
**dass** das Lötblech aus einer Aluminiumlegierung zusammengesetzt wird aus: einer Kernlegierung, die eine Aluminiumlegierung ist, die 0,3 bis 1,2% (Massen-%, das gleiche gilt unten) an Si, 0,3 bis 1,2% an Cu, 0,5 bis 2,0% an Mn, 0,2 bis 1,5% an Mg, und 0,5% oder weniger an Fe enthält, und eines oder mehrere Elemente, die aus der Gruppe ausgewählt werden, die aus 0,02 bis 0,3% an Ti, 0,02 bis 0,3% an V, 0,02 bis 0,3% an Zr und 0,02 bis 0,3% an Cr besteht, und den Ausgleich an Al und unvermeidbaren Verunreinigungen enthält; einem zwischenliegenden Material, das eine Aluminiumlegierung ist, die 1,2% oder weniger an Si, 1,0% oder weniger an Fe, und 0,5 bis 2,0% an Mn enthält, und, falls notwendig, eines oder mehrere Elemente, die aus der Gruppe ausgewählt werden, die aus 1,0% oder weniger an Cu, 0,02 bis 0,3% an Ti, und 0,02 bis 0,3% an V besteht, und den Ausgleich an Al und unvermeidbaren Verunreinigungen enthält; und einem Opferanodenmaterial, das eine Aluminiumlegierung ist, die Zn und eine Al-Fe-Mn-Si-basierte Verbindung enthält, wobei die Aluminiumlegierung 1,0 bis 6,0% an Zn, 1,0% oder weniger an Si, und 2,0% oder weniger an Mn enthält, und, falls notwendig, eines oder mehrere Elemente, die aus der Gruppe ausgewählt werden, die aus 0,02 bis 0,3% an Ti und 0,02 bis 0,3% an V besteht, und den Ausgleich an Al und unvermeidbaren Verunreinigungen enthält; und
**dass** das Herstellungsverfahren die folgende Schritte umfasst: Unterziehen der Kernlegierung einer Homogenisierungsbehandlung bei einer Temperatur von 500°C oder niedriger, oder keiner Homogenisierungsbehandlung, und Unterziehen des zwischenliegenden Materials und des Opferanodenmaterials einer Homogenisierungsbehandlung bei einer Temperatur von 550°C oder höher, um die Kernlegierung, die zwischenliegende Legierung, und das Opferanodenmaterial herzustellen; und Plattieren des zwischenliegenden Materials auf eine Seite der Kernlegierung, Plattieren des Opferanodenmaterials auf die andere Seite der Kernlegierung, Plattieren einer Al-Si-basierten Füllerlegierung auf die andere Seite des zwischenliegenden Materials, und Heißwalzen des resultierenden plattierten Legierungsmaterials, um ein plattiertes Material herzustellen, und Durchführen von mindestens einem zwischenliegenden Ausglühen bei einer Temperatur von 350°C oder höher für zwei Stunden oder mehr, in der Mitte von Kaltwalzen, mit einem Grad des letzten Kaltwalzens von 10 bis 30%, um Zahldichteverhältnisse N₁/N₂ und N₁/N₃ zu ergeben, die jeweils 1,5 oder mehr betragen, wobei N₁, N₂, und N₃ jeweils eine Zahldichte einer intermetallischen Verbindung, die einen Kugel-äquivalenten Korndurchmesser von 0,1 µm oder weniger hat, in der Kernlegierung, dem zwischenliegenden Material bzw. dem Opferanodenmaterial wiedergeben, wobei die Zahldichte durch (die Anzahl der Körner)/µm³ wiedergegeben wird, und wobei der Kugel-äquivalente Korndurchmesser der Durchmesser einer Kugel ist, die das gleiche Volumen wie ein einzelnes Korn hat.

2. Verfahren zum Herstellen eines Lötblechs aus einer Aluminiumlegierung nach Anspruch 1, wobei das Lötblech aus einer Aluminiumlegierung für einen Wärmetauscher bestimmt ist.

## Revendications

1. Procédé de fabrication d'une feuille de brasage en alliage d'aluminium, **caractérisé en ce que**
la feuille de brasage en alliage d'aluminium est composée:
d'un alliage de coeur qui est un alliage d'aluminium contenant 0,3 à 1,2% (en % massique, idem ci-dessous) de Si, 0,3 à 1,2% de Cu, 0,5 à 2,0% de Mn, 0,2 à 1,5% de Mg, 0,5% ou moins de Fe, et contenant un ou plusieurs éléments choisis dans le groupe constitué de 0,02 à 0, 3% de Ti, 0, 02 à 0,3% de V, 0,02 à 0,3% de Zr, et 0,02 à 0,3 % de Cr, et le reste étant de l'Al et des impuretés inévitables ; d'un matériau intermédiaire qui est un alliage d'aluminium contenant 1,2% ou moins de Si, 1,0% ou moins de Fe, 0,5 à 2,0% de Mn, et contenant, si nécessaire,
un ou plusieurs éléments choisis dans le groupe constitué de 1,0% ou moins de Cu, de 0,02 à 0,3% de Ti, et de 0,02 à 0,3% de V, et le reste étant de l'Al et des impuretés inévitables ;
et d'un matériau anodique sacrificiel qui est un alliage d'aluminium contenant du Zn et un composé à base d'Al-Fe-Mn-Si, dans lequel l'alliage d'aluminium contient 1,0 à 6,0% de Zn, 1,0% ou moins de Si, et 2,0% ou moins de Mn, et contenant,
si nécessaire, un ou plusieurs éléments choisis dans le groupe constitué de 0,02 à 0,3% de Ti et de 0,02 à 0,3% de V, et le reste étant de l'Al et des impuretés inévitables ; et
**en ce que** le procédé de fabrication comprend les étapes qui consistent : à soumettre l'alliage de coeur à un traitement d'homogénéisation à une température de 500°C ou moins, ou ne la soumettre à aucun traitement d'homogénéisation, et soumettre le matériau intermédiaire et le matériau anodique sacrificiel à un traitement d'homogénéisation à une température de 550°C ou plus, pour produire l'alliage de coeur, l'alliage intermédiaire, et le matériau anodique sacrificiel ; et à revêtir le matériau intermédiaire sur un côté de l'alliage de coeur, à revêtir le matériau anodique sacrificiel sur l'autre côté de l'alliage de coeur, à revêtir un alliage de remplissage à base d'Al-Si sur l'autre côté du matériau intermédiaire, et de laminer à chaud les matériaux en alliage revêtus résultants, pour produire un matériau revêtu ; et mener au moins un recuit intermédiaire à une température de 350°C ou plus pendant deux heures ou plus, au milieu du laminage à froid, le taux final de laminage à froid étant de 10 à 30%, pour donner les rapports de nombres volumiques N₁/N₂ et N₁/N₃, dont chacun est de 1,5 ou plus, où N₁, N₂, et N₃ représentent un nombre volumique d'un composé intermétallique ayant un diamètre de sphère équivalente des grains de 0,1 µm ou moins présent dans l'alliage de coeur, le matériau intermédiaire, et le matériau anodique sacrificiel, respectivement, dans lequel le nombre volumique est (le nombre de grains) /µm³, et dans lequel le diamètre de sphère équivalente des grains est le diamètre d'une sphère ayant le même volume qu'un grain individuel.

2. Procédé de fabrication d'une feuille de brasage en alliage d'aluminium selon la revendication 1, dans lequel la feuille de brasage en alliage d'aluminium est à un échangeur de chaleur.
